# EUROPÄISCHE PATENTSCHRIFT

(11) **EP 0 543 324 B1**
(45) Veröffentlichungstag und Bekanntmachung des Hinweises auf die Patenterteilung: **24.07.1996**
(21) Anmeldenummer: 92119604.4
(22) Anmeldetag: 17.11.1992
(51) Int. Cl.: F23C 3/00, F23D 14/22

(54) **Brenner für Industrieöfen**
Burner for industrial furnaces
Brûleur pour fours industriels

(30) Priorität: 22.11.1991 DE 4138434
(43) Veröffentlichungstag der Anmeldung: 26.05.1993
(73) Patentinhaber: AICHELIN GMBH, D-70825 Korntal-Münchingen (DE)
(72) Erfinder: Harbeck, Wolfgang, Dr., W-9386 Leubsdorf (DE); Distl, Rudolf, W-7149 Freiberg a.N. (DE); Weiss, Karl, W-9200 Freiberg (DE); Wörner, Theo, W-7050 Waiblingen-Neustadt (DE)
(74) Vertreter: Witte, Alexander, Dr.-Ing.

(56) Entgegenhaltungen:
- EP-A- 0 164 576
- EP-A- 0 243 506
- EP-A- 0 296 032
- GB-A- 2 127 952
- US-A- 4 705 022

## Beschreibung

Die Erfindung betrifft einen Brenner für Industrieöfen, in Form eines Einsatzes, der durch eine Ofenwand in einen Ofenraum hineinragt, wobei der Einsatz Leitungen zur Zuführung von Brennstoff, insbesondere Brenngas, Brennerluft und elektrischer Energie, sowie zur Abführung von Abgas umfaßt, mit einem Brennerrohr, in dem eine durch Wände begrenzte Brennkammer gebildet ist, deren Austrittsende eine Öffnung zum Eintritt einer Flamme in den Ofenraum aufweist, wobei eine Gaslanze in das Brennerrohr zur Zuführung von Brennstoff in die Brennkammer hineinragt, wobei das Brennerrohr von einem Rekuperatorrohr unter Bildung eines Zwischenraums umschlossen ist, durch den Brennerluft zugeführt wird.

Ein derartiger Brenner ist aus der EP-A-0 296 032 bekannt.

Als nachteilig hat sich bei dem bekannten Brenner erwiesen, daß das Volumen der Brennkammer nicht verändert werden kann. Es sind daher für verschiedene Brennerleistungen und ggf. auch für verschiedene Einsatzbedingungen unterschiedliche Brenner erforderlich, deren Konstruktion jeweils an das gewünschte Brennkammervolumen angepaßt werden muß.

Ferner hat die Anordnung der Zündelektrode in der Brennkammer den Nachteil, daß in Verbindung mit der Luftführung der Brennerluft bei der Inbetriebnahme des Brenners ein ungünstiges Gas/Luftgemisch in der Brennkammer vorhanden sein kann, was zu Kaltstartproblemen des Brenners führen kann.

Aus der EP-A-0 243 506 ist ein weiterer Brenner bekannt, bei dem das Volumen der Brennkammer verändert werden kann, indem das hintere Ende der Brennkammer, das durch eine radiale Platte gebildet ist, axial verschiebbar ausgeführt ist.

Jedoch werden bei diesem Brenner die Zündprobleme noch dadurch verstärkt, daß sich bei einer Veränderung des Brennkammervolumens das Mischungsverhältnis von Brennstoff zu Brennerluft in der Brennkammer verändert.

Schließlich sei auf die Patent Abstracts of Japan, Vol. 10, Number 307 (M-527) (2363), 18. Oktober 1986, hingewiesen, aus der es grundsätzlich bekannt ist, einen Brenner mit einer Zündkammer zu versehen, der ein zündfähiges Gemisch separat zugeführt wird.

Bei dem bekannten Brenner wird zwar ein Entstehen von Zündproblemen weitgehend reduziert, jedoch ist dieser Brenner nicht für unterschiedliche Einsatzleistungen geeignet.

Bei einem weiteren aus der EP-A-0 164 576 bekannten Brenner ist die Brennkammer als kurzes Rohrstück ausgebildet, das am brennraumseitigen Ende verjüngt ist und eine Öffnung zum Austritt der Flamme aufweist, während das von der Brennraumseite abgewandte Ende der Brennkammer durch eine radiale Platte gebildet wird, die auf die innere Stirnseite des Rohres aufgesetzt ist.

In die radiale Platte sind auf einem Umfang derselben Öffnungen angebracht, die einen Zutritt von Brennerluft in die Brennkammer ermöglichen. Durch eine zentrische Öffnung in der Platte hindurch ist eine rohrförmige Gaslanze bis in den Innenraum der Brennkammer geführt. Die Gaslanze reicht bis in den Außenraum des Industrieofens und wird dort mit Brenngas beaufschlagt. Die bereits erwähnte Brennerluft wird der Rückseite der radialen Platte über einen Innenraum einer Rekuperator-Anordnung zugeführt. Die auf diese Weise zugeführte Brennerluft wird jedoch im Bereich der erwähnten radialen Platte in zwei Teilströme aufgeteilt, von denen der eine Teilstrom durch die radiale Platte hindurch in die Brennkammer eintritt, während der andere Teilstrom axial an der Brennkammer vorbeiströmt und am vorderen Ende der Brennkammer als Sekundärluft der Flamme beigemischt wird. Hierzu ist ein Düsenträger vorgesehen, der die Brennkammer um die vordere Öffnung herum ringförmig hält, und zwar mittels elastischer Verspannung.

Die Gaslanze ist mit einer koaxial durch sie hindurchreichenden Elektrode versehen, die bis in die Brennkammer hineinreicht und dort für eine Zündung eines Luft/Gasgemisches bei der Inbetriebnahme des Brenners dient.

Der bekannte Brenner weist damit die folgenden Nachteile auf:

Dadurch, daß die Brennkammer nur aus einem kurzen Rohrstück besteht, das an der Innenseite über die radiale Platte abgeschlossen ist, kann das Volumen der Brennkammer nicht verändert werden. Es sind daher für verschiedene Brennerleistungen und ggf. auch für verschiedene Einsatzbedingungen unterschiedliche Brenner erforderlich, deren Konstruktion jeweils an das gewünschte Brennkammervolumen angepaßt werden muß.

Die abgeschlossene Konstruktion der Brennkammer bei dem bekannten Brenner am ofenraumseitigen Ende desselben hat ferner den Nachteil, daß die Demontage der Brennkammer sehr kompliziert ist, weil hierzu der gesamte Brenner ausgebaut, das heißt nach außen aus dem Industrieofen herausgezogen werden muß, weil die Brennkammer von der Außenseite her nicht zugänglich ist.

Ferner hat die Anordnung der Zündelektrode in der Brennkammer den Nachteil, daß in Verbindung mit der Luftführung der Brennerluft bei der Inbetriebnahme des Brenners stets ein ungünstiges Gas/Luftgemisch in der Brennkammer vorhanden ist. Wenn nämlich ein Teil der Brennerluft als Sekundärluft an der Brennkammer vorbeigeführt wird und zum Beispiel nur 70 % der zugeführten Brennerluft in die Brennkammer gelangen, so kann dies zu Zündproblemen beim Kaltstart des Brenners führen. Zwar hat man versucht, dieses an sich bekannte Problem dadurch zu lösen, daß man zum Starten des Brenners weniger Gas zuführt, so daß das Gas/Luftgemisch in der Brennkammer für die Zündung optimiert wird, dieser Kunstgriff erfordert jedoch zusätzlichen Aufwand in der Regelung des Brenners, insbesondere beim Anlaufen, und erschwert einen automatisierten Betrieb.

Der Erfindung liegt demnach die Aufgabe zugrunde, einen Brenner zu schaffen, bei dem die Nachteile des Standes der Technik vermieden werden. Insbesondere soll mit der Erfindung erreicht werden, daß der Brenner für eine große Anzahl von Einsatzfällen, insbesondere Einsatzleistungen, konstruktiv nicht verändert zu werden braucht, daß die Brennkammer leicht zugänglich ist und daß Kaltstartschwierigkeiten vermieden werden.

Diese Aufgabe wird bei einem Brenner der eingangs genannten Art erfindungsgemäß dadurch gelöst, daß die Wände zueinander verstellbar angeordnet sind, so daß die Brennkammer in ihrem Volumen einstellbar ist, und daß am hinteren, dem Ofenraum abgewandten Ende der Brennkammer eine Zündkammer vorgesehen ist, die über die Gaslanze über eine definierte Öffnung mit Brennstoff und über eine definierte Öffnung aus dem Zwischenraum zwischen Brennerrohr und Rekuperatorrohr mit Brennerluft versorgt wird.

Die der Erfindung zugrundeliegende Aufgabe wird auf diese Weise vollkommen gelöst, weil die Verstellbarkeit der Wände bewirkt, daß das Volumen der Brennkammer in großen Bereichen eingestellt werden kann. Dies kann alternativ dadurch geschehen, daß unterschiedliche Einsätze für die Brennkammer verwendet werden, andererseits ist aber auch eine kontinuierliche Veränderung des Brennkammervolumens im Betrieb möglich, wenn die Wände kontinuierlich verstellbar ausgeführt werden. Dadurch, daß am hinteren, dem Ofenraum abgewandten Ende der Brennkammer eine Zündkammer vorgesehen ist, die über die Gaslanze über eine definierte Öffnung mit Brennstoff und über eine definierte Öffnung aus dem Zwischenraum zwischen Brennerrohr und Rekuperatorrohr mit Brennerluft versorgt wird, ist eine zuverlässige Zündung sichergestellt, da in der Zündkammer ein genau vorbestimmtes Mischungsverhältnis von Brennstoff zu Brennerluft durch das Verhältnis der Öffnungen in Verbindung mit den entsprechenden Gasdrücken eingestellt wird, das unabhängig vom Mischungsverhältnis in der Hauptbrennkammer gewählt werden kann.

Bei einer bevorzugten Weiterbildung des erfindungsgemäßen Brenners ist das Brennerrohr an dem Austrittsende verjüngt und in dem Brennerrohr eine radiale Platte im Abstand von dem verjüngten Ende angeordnet, die in dem Brennerrohr axial verschiebbar angeordnet ist.

Auf diese Weise wird in konstruktiv besonders einfacher Weise erreicht, daß das Brennkammervolumen verändert werden kann, weil lediglich die Platte, ähnlich wie ein Kolben in einem Zylinder, axial in dem Brennerrohr verstellt werden muß.

Bei einer bevorzugten Weiterbildung dieser Variante, bei der die Platte am inneren Ende einer rohrförmigen Gaslanze angeordnet ist und Brennerluft an das innere Ende der Gaslanze geführt ist, die durch Öffnungen in der Platte hindurchtritt, wird in vorteilhafter Weise erreicht, daß die axiale Verschiebbarkeit der Platte durch den Einsatz unterschiedlich langer Gaslanzen bewirkt wird.

Diese Maßnahme hat also den Vorteil, daß lediglich durch Einsatz unterschiedlich langer Gaslanzen eine Variation des Brennkammervolumens möglich ist. Man kann daher beim Probelauf des Brenners für einen bestimmten Einsatzfall nacheinander unterschiedlich lange Gaslanzen einsetzen, um auf diese Weise das Brennkammervolumen zu optimieren, das dann nach Einsetzen einer optimal langen Gaslanze in der eingestellten Größe verbleibt. Zusätzliche Verstellmechanismen sind in diesem Falle nicht erforderlich.

Bei einer alternativen Ausführungsform, bei der ebenfalls die Platte am inneren Ende einer rohrförmigen Gaslanze angeordnet ist, und Brennerluft an das innere Ende der Gaslanze geführt ist, die durch Öffnungen in der Platte hindurchtritt, wird die axiale Verschiebbarkeit der Platte dadurch erreicht, daß eine axial verschiebbare Gaslanze eingesetzt wird.

Diese Maßnahme hat den Vorteil, daß eine kontinuierliche Einstellung des Brennkammervolumens möglich ist, beispielsweise sogar im Betrieb des Brenners, so daß eine Feinabstimmung möglich ist, bei der das Brennkammervolumen auf die optimale Größe eingestellt werden kann.

Bei einer anderen bevorzugten Ausgestaltung der Erfindung geht das Brennerrohr axial bis zu einem Außenraum des Ofens durch.

Diese Maßnahme hat den Vorteil, daß die Brennkammer auch bei nicht-demontiertem Brennerrohr von der Außenseite her zugänglich ist, weil lediglich die Gaslanze mit der Platte aus dem Brennerrohr herausgezogen werden muß und dann die Brennkammer am unteren Ende des Brennerrohres auch von außen zugänglich ist. Eine komplizierte Demontage bzw. ein Herausfädeln einer axial kurzen Brennkammer mittels eines langen Hakens, wie dies beim Stand der Technik erforderlich ist, entfällt somit.

Eine weitere Variante der Erfindung mit Brennerrohr zeichnet sich dadurch aus, daß das Brennerrohr nur an seinem außenraumseitigen Ende axial elastisch gehalten ist.

Diese Maßnahme hat den Vorteil, daß durch die einendige Einspannung des Brennerrohres ein besonderes Augenmerk auf Probleme gelegt werden muß, die durch thermische Expansion des Brennerrohres auftreten. Wenn sich nämlich bei dem erfindungsgemäßen Brenner das Brennerrohr beispielsweise durch Erwärmung ausdehnt, so wirkt sich dies auf die Einspannung nicht aus, weil diese, wie erwähnt, nur an einem Ende des Brennerrohres vorhanden ist und das andere Ende des Brennerrohres sich somit in ausreichenden Grenzen bewegen kann.

Bei den beiden letztgenannten Ausführungsbeispielen ist ferner von Vorteil, wenn die Brennerluft in der Höhe des Außenraumes außen an das Brennerrohr geführt wird, und stromaufwärts der Platte Öffnungen im Brennerrohr angeordnet sind, so daß die Brennerluft teilweise als Primärluft in den Innenraum des Brennerrohres und teilweise als Sekundärluft an ein Ende des Brennerrohres strömt.

Diese Maßnahme hat den Vorteil, daß die prozentualen Anteile der Teilströme durch Lage und Dimensionierung der Öffnungen konstruktiv vorgebbar sind.

Bei einem weiteren Ausführungsbeispiel der Erfindung, bei dem das Rekuperatorrohr das Brennerrohr koaxial umschließt, ist besonders bevorzugt, wenn das Brennerrohr an seinem verjüngten Ende axial beweglich in einem ofenraumseitigen Ende des Rekuperatorrohres geführt ist.

Diese Maßnahme hat zum einen den bereits erwähnten Vorteil, daß das einendig eingespannte Brennerrohr sich am nichteingespannten Ende axial ausdehnen bzw. zusammenziehen kann. Andererseits hat die Maßnahme den Vorteil, daß das freie Ende des Brennerrohres radial gehalten ist.

Bei weiteren Ausführungsbeispielen der Erfindung besteht das Brennerrohr mindestens im Bereich der Brennkammer aus einer Hochtemperaturkeramik. Alternativ kann dabei das gesamte Brennerrohr aus der Hochtemperaturkeramik bestehen, andererseits ist aber auch möglich, das Brennerrohr mehrstückig auszubilden und die mehreren Stücke aus unterschiedlichem Werkstoff auszuführen. In diesem Falle kann lediglich der Brennkammerbereich aus einer Hochtemperaturkeramik bestehen, während die übrigen Bereiche aus einem anderen, weniger aufwendigen Werkstoff bestehen können.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine äußerst vereinfachte seitliche Gesamtansicht, teilweise aufgebrochen und geschnitten, eines Ausführungsbeispiels eines erfindungsgemäßen Brenners;
- Fig. 2: das brennraumseitige Ende des Brenners gemäß Fig. 1, in vergrößertem Maßstab;
- Fig. 3: ein noch weiter im Maßstab vergrößertes Detail aus Fig. 2, in einer Schnittdarstellung entlang der Linien III-III von Fig. 4;
- Fig. 4: eine Draufsicht auf die Anordnung gemäß Fig. 3, in Richtung der Pfeile IV-IV von Fig. 3.

In den Figuren bezeichnet 10 insgesamt einen Brenner, wie er für Industrieöfen, beispielsweise zur Diffusionswärmebehandlung von metallischen Werkstücken, eingesetzt wird.

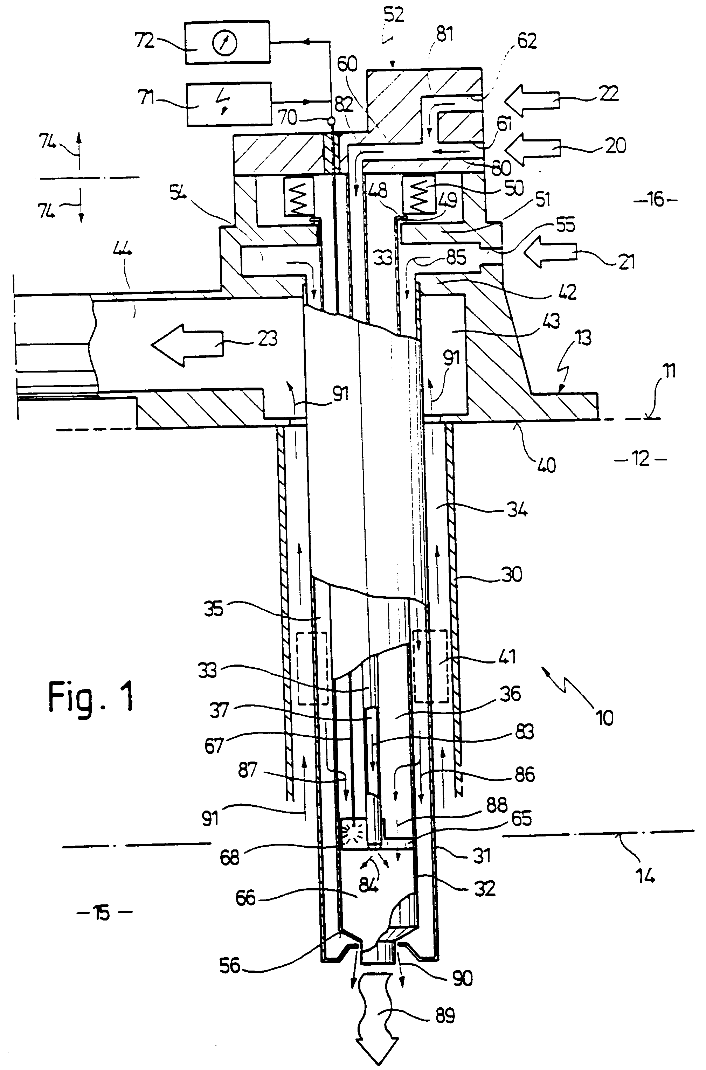

Der Brenner 10 ist in eine äußere Oberfläche 11 eines nicht näher dargestellten Industrieofens eingesetzt. Der Brenner 10 durchsetzt dabei eine Ofenwand 12, indem er mit einem Befestigungsflansch 13 auf die äußere Oberfläche 11 aufgesetzt und dort beispielsweise aufgeschraubt ist. Der Brenner 10 steht an seinem in Fig. 1 unteren Ende über eine innere Oberfläche 14 der Ofenwand 12 vor und ragt somit in einen Ofenraum 15 hinein. Die Zuführungen und Steuereinheiten des Brenners 10 sind hingegen in einem Außenraum 16 außerhalb der Ofenwand 12 angeordnet.

Im Außenraum 16 ist der Brenner 10 mit insgesamt vier Zu- bzw. Abführungen von Medien versehen. So wird dem Brenner 10 Brenngas 20, Brennerluft 21 sowie Spülluft 22 zugeführt, während Abgas 23 vom Brenner 10 abgeführt wird.

Abgesehen von den Zu- und Abführungen im Bereich oberhalb des Flansches 13 ist der Brenner 10 in seinen funktionalen Bauelementen im wesentlichen koaxial ausgebildet. So weist der Brenner 10 vorzugsweise eine äußere Rekuperatorwand 30 und ein inneres Rekuperatorrohr 31 auf. Das innere Rekuperatorrohr 31 umschließt wiederum ein Brennerrohr 32, das vorzugsweise aus einer Keramik besteht. Im Zentrum, das heißt in der Längsachse des Brenners 10, befindet sich eine rohrförmige Gaslanze 33.

Zwischen äußerer Rekuperatorwand 30 und innerem Rekuperatorrohr 31 entsteht somit ein erster, hohlzylindrischer Zwischenraum 34, durch den Abgas abgeleitet wird. Ein zweiter hohlzylindrischer Zwischenraum 35 zwischen innerem Rekuperatorrohr 31 und Brennerrohr 32 dient zur Zuführung von Brennerluft, während ein dritter, ebenfalls im wesentlichen hohlzylindrischer Zwischenraum 36 zwischen Brennerrohr 32 und Gaslanze 33 einmal ebenfalls zur Führung von Brennerluft, andererseits aber auch zur Aufnahme einer Elektrode dient, wie dies weiter unten im einzelnen noch erläutert werden wird. Schließlich weist die Gaslanze 33 einen Innenraum 37 auf, durch den Brennergas oder ein Gemisch von Brennergas und Spülluft zuführbar ist.

Die äußere Rekuperatorwand 30 erstreckt sich in Fig. 1 nach oben bis an eine Innenseite 40 des Flansches 13. In diesem axialen Bereich ist das innere Rekuperatorrohr 31 mit mehreren radialen Wärmeübertragungsblechen 41 versehen, die einerseits in den ersten Zwischenraum 34 und andererseits in den zweiten Zwischenraum 35 ragen und mit dem inneren Rekuperatorrohr 31 wärmeleitend verbunden sind. Dadurch wird in an sich bekannter Weise ein Wärmeaustausch zwischen den im ersten Zwischenraum 34 abgeführten heißen Abgasen und der über den zweiten Zwischenraum 35 zuströmenden Brennerluft erreicht.

Das innere Rekuperatorrohr 31 läuft axial in Fig. 1 nach oben weiter durch als die äußere Rekuperatorwand 30. Das innere Rekuperatorrohr 31 ist an seinem in Fig. 1 oberen Ende gasdicht in einem ersten Zwischenflansch 42 des Flansches 13 gehalten. Auf diese Weise entsteht zwischen dem ersten Zwischenflansch 42 und der Innenseite 40 des Flansches 13 ein Ringraum 43, der mit einem Abgasrohr 44 verbunden ist. Der Ringraum 43 dient zur Aufnahme und zum Sammeln der im ersten Zwischenraum 34 abgeführten Abgase und zur Übergabe derselben an das Abgasrohr 44.

Das Brennerrohr 32 ragt axial noch weiter in Fig. 1 nach oben als das innere Rekuperatorrohr 31. Das Brennerrohr 32 ist in Fig. 1 oben mit einem nach außen umgekanteten Ende 48 versehen, das somit eine Ringschulter bildet. Das umgekantete Ende 48 liegt über eine elastische Dichtung 49, beispielsweise einen O-Ring, auf einem zweiten Zwischenflansch 51 des Flansches 13 auf. Das umgekantete Ende 48 wird dabei mittels eines Federringes 50 angedrückt, in dem ein Deckel 52 von oben auf den Flansch 13 aufgeschraubt wird. Der Federring 50 ist dabei nur äußerst schematisch angedeutet, er kann beispielsweise durch einen Metallring gebildet werden, der sich über mehrere einzelne Federn gegenüber dem Deckel 52 abstützt und damit das umgekantete Ende 48 gegen die elastische Dichtung 49 und damit den zweiten Zwischenflansch 51 drückt. Im Ergebnis ist damit das Brennerrohr 32 nur an seinem oberen Ende eingespannt, und zwar elastisch.

Zwischen den beiden Zwischenflanschen 42 und 51 befindet sich ein weiterer Ringraum 54, der mit einem Einlaß 55 für die Brennerluft 21 versehen ist. Die Brennerluft 21 kann somit über den Einlaß 55 und den Ringraum 54 in den zweiten Zwischenraum 35 zwischen innerem Rekuperatorrohr 31 und Brennerrohr 32 strömen.

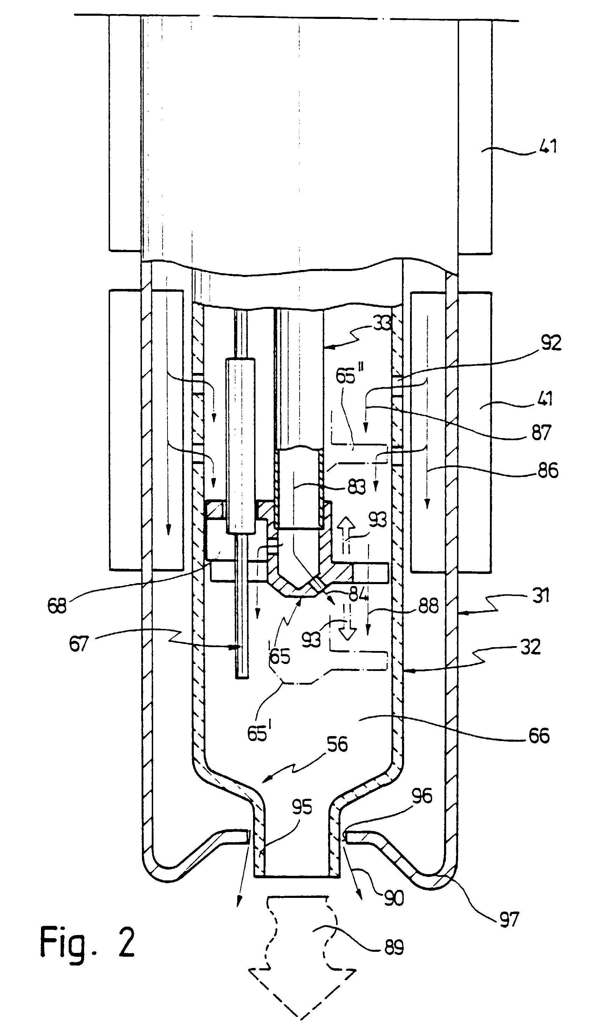

Das Brennerrohr 32 ist an seinem unteren, in den Ofenraum 15 hineinragenden Ende verjüngt ausgebildet, wie man besonders deutlich aus Figuren 1 und 2 erkennt.

Im Deckel 52 ist ein Kanal 60 ausgebildet, der an das obere Ende der Gaslanze 33 angeschlossen ist. Der Kanal 60 teilt sich nach außen hin in zwei Teilkanäle auf, von denen einer einen Einlaß 61 für das Brenngas 20 und der andere einen Einlaß 62 für die Spülluft 22 bildet.

Am unteren Ende der Gaslanze 33 ist diese mit einer Platte 65 versehen, die sich radial im Brennerrohr 32 erstreckt und damit eine obere Endwand für eine Brennkammer 66 bildet. Die Brennkammer 66 erstreckt sich somit am unteren Ende des Brennerrohres 32 von der radialen Platte 65 bis zum verjüngten Ende 56.

Eine Elektrode 67 ist axial im dritten Zwischenraum 36 zwischen Brennerrohr 32 und Gaslanze 33 angeordnet. Das untere Ende der Elektrode 67 mündet in eine Zündkammer 68, die einen integralen Bestandteil der Platte 65 bildet.

Das obere Ende der Elektrode 67 ist mit einem Anschluß 70 versehen. Der Anschluß 70 ist einerseits zu einem Zündgerät 71 und andererseits zu einem Ionenstrom-Meßgerät 72 geführt.

Mit einem Pfeil 74 ist angedeutet, daß der Deckel 52 vom Flansch 13 abgenommen werden kann, und zwar zusammen mit der Gaslanze 33 und der daran befestigten Platte 65 sowie der Elektrode 67. Nach Demontage des Deckels 52 kann dann der Federring 50 entfernt und das Brennerrohr 32 herausgezogen werden.

Andererseits soll mit dem Pfeil 74 angedeutet werden, daß an den Deckel 52 Gaslanzen 33 bzw. Elektroden 67 unterschiedlicher Länge angesetzt werden können oder daß sogar die Gaslanze 33 und die Elektrode 67 in ihrer Länge kontinuierlich einstellbar sind, beispielsweise durch Teleskopanordnungen, gasdichte Durchführungen und dergleichen mehr.

Die diversen Medienströme beim Brenner 10 gemäß Fig. 1 sollen nun kurz erläutert werden:

Mit einem Pfeil 80 ist angedeutet, daß Brenngas 20 über den Einlaß 61 in den Kanal 60 einströmt. Der Pfeil 81 deutet an, daß dem Brenngas 20 dabei im Kanal 60 Spülluft 22 über den Einlaß 62 zugemischt werden kann. Das Gas/Luftgemisch strömt nun im Kanal 60 in Richtung des Pfeils 82 in den Innenraum 37 der Gaslanze 33 in Fig. 1 nach unten, wie mit einem Pfeil 83 angedeutet. Am unteren Ende der Gaslanze 33 tritt das Gas/Luftgemisch, wie mit einem Pfeil 84 angedeutet, in die Brennkammer 66 ein.

Mit einem Pfeil 85 ist angedeutet, daß Brennerluft 21 über den Einlaß 55 einströmt und im zweiten Zwischenraum 35 nach unten in Fig. 1 geführt wird. Wie man besonders deutlich auch aus Fig. 2 erkennen kann, wird der Brennerluftstrom am unteren Ende des Brennerrohres 32, jedoch stromaufwärts der Platte 65, dadurch geteilt, daß ein erster Teil-Luftstrom (Pfeil 86) weiter nach unten im zweiten Zwischenraum 85 strömt, während ein anderer Teilstrom (Pfeil 87) durch Öffnungen 92 (Fig. 2) im Brennerrohr 32 hindurchtritt und dort im dritten Zwischenraum nach unten in Fig. 1 und 2 fließt.

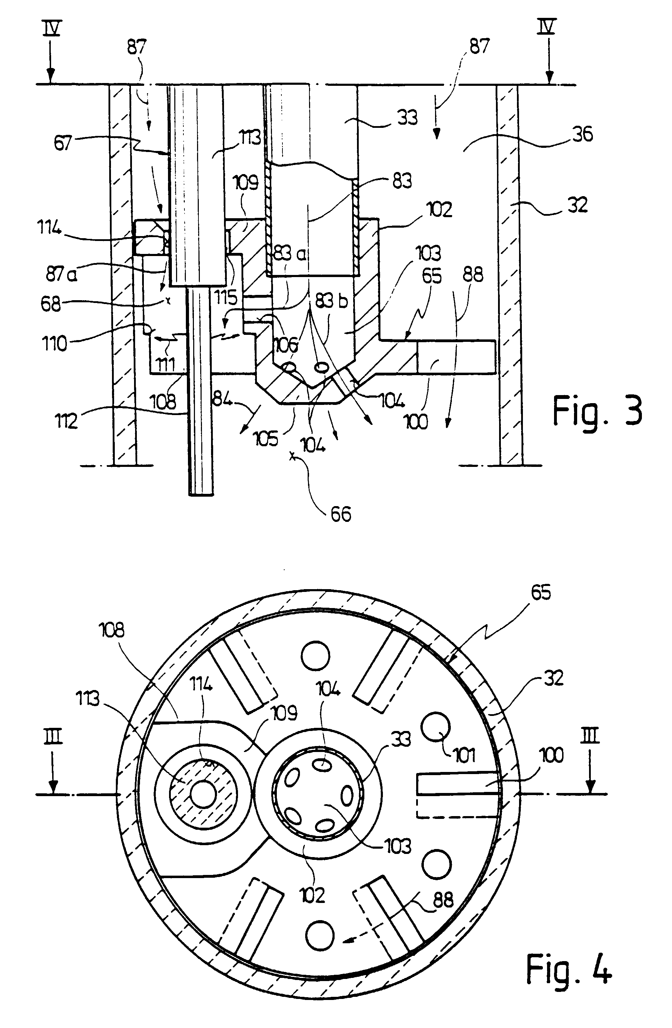

Mit 88 ist angedeutet, daß der im dritten Zwischenraum 36 geführte Teil-Luftstrom wiederum teilweise (Näheres ist in Fig. 3 erläutert) durch die Platte 65 hindurchströmt und in die Brennkammer 66 gelangt.

Im Betrieb des Brenners 10 wird somit ein Gas/Luftgemisch in der Brennkammer 66 verbrannt und tritt als Flamme 89 nach unten auß. Mit Pfeilen 90 ist angedeutet, daß der Teil-Luftstrom (Pfeil 86) der Brennerluft 21 im unteren Ende des zweiten Zwischenraumes 35 der Flamme 89 als Sekundärluft beigemischt wird. Dies ist deswegen möglich, weil das verjüngte Ende 57 des Brennerrohres 32 vom unteren Ende des inneren Rekuperatorrohres über einen Ringspalt getrennt ist.

Die im Ofenraum 15 anfallenden Abgase steigen in Richtung der Pfeile 91 im ersten Zwischenraum 34 in Fig. 1 nach oben auf, werden im Ringraum 43 umgelenkt und treten dann als Abgas 23 durch das Abgasrohr 44 aus.

In der vergrößerten Darstellung der Fig. 2 sind weitere Einzelheiten konstruktiver Art am unteren Ende des Brenners 10 zu erkennen.

So erkennt man zunächst, daß das Brennerrohr 32 an dem verjüngten Ende 56 in ein Mündungsrohr 95 ausläuft, das über einen Ringspalt 96 in einem vorgewölbten Ende 97 des inneren Rekuperatorrohres 31 angeordnet ist. Die axiale Länge des Mündungsrohres 95 ist dabei so dimensioniert, daß sich das Brennerrohr 32 im Bereich seiner Betriebstemperaturen so weit ausdehnen bzw. zusammenziehen kann, daß das Mündungsrohr 95 im Ringspalt 96 läuft.

Man erkennt ferner in Fig. 2 deutlich durch die strichpunktierten Darstellungen 65' und 65'', daß die Platte 65 in ihrer axialen Lage innerhalb des Brennerrohrs 32 unterschiedlich positioniert werden kann. Auf diese Weise kann das Volumen der Brennkammer 66 eingestellt werden. Da die Platte 65 mit radialem Spiel innerhalb des Brennerrohres 32 angeordnet ist und andererseits lediglich von der Gaslanze 33 sowie der Elektrode 67 gehalten wird, braucht lediglich die Länge der Gaslanze 33 bzw. der Elektrode 67 variiert zu werden, um die axiale Lage der Platte 65 einzustellen, wie mit einem Pfeil 93 in Fig. 2 angedeutet.

Betrachtet man nun die noch weiter vergrößerte Detaildarstellung der Figuren 3 und 4, so erkennt man zunächst, daß die Platte 65 im Bereich ihres Umfanges mit insgesamt fünf Schlitzen 100 versehen ist, die zur Oberfläche der Platte 65 geneigt verlaufen. Die in Richtung des Pfeiles 88 durch die Schlitze 100 hindurchtretende Primärluft für die Brennkammer 66 erhält somit einen Drall, das heißt sie wird in Umfangsrichtung in die Brennkammer 66 eingeführt. Zusätzlich sind in der Platte 65 axiale Bohrungen 101 vorgesehen.

Im Zentrum ist die Platte 65 mit einem axial nach oben vorstehenden Hals 102 versehen, der einen Hohlraum 103 einschließt. In das obere Ende des Halses 102 ist das untere Ende der Gaslanze 33 gasdicht eingefügt, beispielsweise eingeschweißt.

Der Hohlraum 103 steht über fünf Bohrungen 104 mit der Brennkammer 66 in Verbindung. Die fünf Bohrungen 104 sind gleichmäßig in einem nach unten vorstehenden Ende 105 der Platte 65 angeordnet. Es versteht sich, daß die Bohrungen 104 auch in anderer Anzahl oder Form vorgesehen werden können oder daß auch über die Bohrungen 104 eine bestimmte Richtung des durch sie hindurchströmenden Gases vorgegeben werden kann.

Über eine seitliche Bohrung 106 ist der Hohlraum 103 im Hals 102 mit der Zündkammer 68 verbunden. Die Zündkammer 68 befindet sich radial neben dem Hohlraum 103. Die Zündkammer 68 wird axial nach oben durch eine Kammerwand 109 begrenzt, die einstückig an den Hals 102 angeformt ist. Unterhalb der radial verlaufenden Kammerwand 109 wird die Zündkammer 68 innen durch den Hals 102 und außen durch die Wand des Brennerrohres 32 begrenzt.

Der Hals 102 läuft zu diesem Zweck in ein in der Draufsicht der Fig. 4 U-förmiges Wandteil 108 aus, das vom Hals 102 bis an die Wand des Brennerrohres 32 führt.

Das Wandteil 108, das somit die Zündkammer 68 seitlich umschließt, ist unterhalb, das heißt stromabwärts der seitlichen Bohrung 106, mit einer umlaufenden Kante 110 versehen. Die umlaufende Kante 110 ist scharfkantig ausgebildet, damit sich zwischen der umlaufenden Kante 110 als Masse-Gegenelektrode und einer Mittelelektrode 112 der Zündelektrode 67 eine Funkenstrecke 111 ausbilden kann. Dadurch ist die Anordnung ferner so getroffen, daß sich das Volumen der Zündkammer 68 in der Darstellung der Fig. 3 von oben nach unten vergrößert, weil sich an die umlaufende Kante 110 nach unten ein Abschnitt der Zündkammer 68 mit größerem Volumen anschließt.

Um die Zündelektrode 67 gegen die auf Massepotential liegende Platte 65 zu isolieren, ist die Mittelelektrode 112 in diesem Bereich mit einem Keramikmantel 113 umgeben. Der Keramikmantel 113 läuft mit Spiel in einer Bohrung 114 in der Kammerwand 109, so daß ein Ringspalt 115 stehen bleibt.

Die Wirkungsweise der Anordnung gemäß Figuren 3 und 4 ist folgende:

Es wurde bereits erwähnt, daß im dritten Zwischenraum 36 zwischen Brennerrohr 32 und Gaslanze 33 kurz oberhalb der Platte 65 ein Teilstrom 87 der Brennerluft 21 strömt, der zuvor die Öffnungen 92 im Brennerrohr 32 passiert hatte, wie Fig. 2 deutlich zeigt.

Dieser Teilstrom 87 verzweigt sich nun nochmals in einen Anteil (Pfeil 88), der durch die Schlitze 100 sowie die Bohrungen 101 in der Platte 65 hindurch in die Brennkammer 66 strömt, sowie einen zweiten Teil (Pfeil 87a), der durch den Ringspalt 115 in die Zündkammer 68 gelangt.

In entsprechender Weise teilt sich der Strom des Brenngases 20 (Pfeil 83) in der Gaslanze 33 in zwei Teilströme 83a und 83b auf. Der Teilstrom 83a durchsetzt die seitliche Bohrung 106 vom Hohlraum 103 in die Zündkammer 68, während der andere Teilstrom 83b durch die Bohrungen 104 nach unten in die Brennkammer 66 strömt.

Durch geeignete Dimensionierung des Ringspaltes 115 sowie der seitlichen Bohrung 106 kann man (in Verbindung mit den jeweiligen Drücken von Brenngas 20 und Brennerluft 21) in der Zündkammer 68 ein Gas/Luftgemisch einstellen, das optimal zündfähig ist. Davon unabhängig ist das Gas/Luftgemisch in der Brennkammer 66 einstellbar, und zwar ebenfalls durch Dimenisonierung der entsprechenden Querschnitte bei den Schlitzen 100, den Bohrungen 101 sowie den Bohrungen 104.

Es versteht sich, daß im Rahmen der vorliegenden Erfindung zahlreiche Abwandlungen möglich sind, ohne daß dies den Rahmen der Erfindung sprengt.

So kann der Brenner 10 mit gasförmigen oder auch flüssigen Brennstoffen betrieben werden. Sein Einsatzgebiet ist darüber hinaus nicht auf die Beheizung von Industrieöfen beschränkt, der Brenner 10 kann vielmehr auch bei Öfen anderer Art eingesetzt werden.

Die Zündeleketrode 67 kann darüber hinaus nicht nur zum Zünden eines Gas/Luftgemisches oder allgemein eines Brennstoff/Luftgemisches in der Zündkammer 68 eingesetzt werden, wozu Zündspannungen in der Größenordnung zwischen 6 und 10 kV erforderlich sind, die Zündelektrode 67 kann vielmehr auch, wie bereits mit dem Ionenstrom-Meßgerät 72 angedeutet, dazu eingesetzt werden, um den laufenden Betrieb des Brenners zu überwachen. Zu diesem Zwecke wird bei laufendem Brenner der Ionenstrom gemessen, der sich in der Brenneratmosphäre durch Anlegen einer niedrigen Gleichspannung zwischen Mittelelektrode 112 und Masse ergibt, wobei dieser Ionenstrom dann in der Größenordnung zwischen 6 und 16 µA liegt.

Während im Betrieb des Brenners 10 in der Zündkammer 68 das dort vorhandene Gemisch möglichst vollständig verbrannt wird, ist in der Brennkammer 66 vorzugsweise eine unvollständige Verbrennung des Brennstoffes mit Primär- und Spülluft vorgesehen.

Die Ausführung kann beim Brenner 10 ferner so getroffen werden, daß die Wärmeübertragungsbleche 41 zusätzlich eine radiale Stabilisierung des inneren Rekuperatorrohres 31 in der äußeren Rekuperatorwand 30 bilden. Die äußere Rekuperatorwand 30 kann dabei entweder ein separates Rohr oder ein raumfester Bestandteil der Ofenwand 12 sein.

## Patentansprüche

1. Brenner für Industrieöfen, in Form eines Einsatzes, der durch eine Ofenwand (12) in einen Ofenraum (15) hineinragt, wobei der Einsatz Leitungen (33, 35, 70) zur Zuführung von Brennstoff (20), insbesondere Brenngas, Brennerluft (21) und elektrischer Energie, sowie zur Abführung von Abgas (23) umfaßt, mit einem Brennerrohr (32), in dem eine durch Wände (32, 65) begrenzte Brennkammer (66) gebildet ist, deren Austrittsende (56) eine Öffnung zum Eintritt einer Flamme in den Ofenraum (15) aufweist, wobei eine Gaslanze in das Brennerrohr (32) zur Zuführung von Brennstoff (20) in die Brennkammer (66) hineinragt, wobei das Brennerrohr (32) von einem Rekuperatorrohr (31) unter Bildung eines Zwischenraums (36) umschlossen ist, durch den Brennerluft (21) zugeführt wird, dadurch gekennzeichnet, daß die Wände (32, 65) zueinander verstellbar angeordnet sind, so daß die Brennkammer (66) in ihrem Volumen einstellbar ist, und daß am hinteren, dem Ofenraum (15) abgewandten Ende der Brennkammer (66) eine Zündkammer (68) vorgesehen ist, die über die Gaslanze (33) über eine definierte Öffnung (106) mit Brennstoff (20) und über eine definierte Öffnung (115) aus dem Zwischenraum (36) zwischen Brennerrohr (32) und Rekuperatorrohr (31) mit Brennerluft (21) versorgt wird.

2. Brenner nach Anspruch 1, dadurch gekennzeichnet, daß das Brennerrohr (32) an dem Austrittsende (56) verjüngt ist, und daß in dem Brennerrohr (32) eine radiale Platte (65) im Abstand von dem verjüngten Ende (56) angeordnet ist, die in dem Brennerrohr (32) axial verschiebbar angeordnet ist.

3. Brenner nach Anspruch 2, dadurch gekennzeichnet, daß die Platte (65) am inneren Ende der rohrförmig ausgebildeten Gaslanze (33) angeordnet ist, daß die Brennerluft (21) durch Öffnungen (100, 101, 106) in der Platte (65) aus der Gaslanze (33) in die Brennkammer (66) hindurchtritt, und daß die axiale Verschiebbarkeit der Platte (65) durch den Einsatz unterschiedlich langer Gaslanzen (33) bewirkt wird.

4. Brenner nach Anspruch 2, dadurch gekennzeichnet, daß die Platte (65) am inneren Ende der rohrförmig ausgebildeten Gaslanze (33) angeordnet ist, daß die Brennerluft (21) durch Öffnungen (100, 101, 106) in der Platte (65) aus der Gaslanze (33) in die Brennkammer (66) hindurchtritt, und daß die axiale Verschiebbarkeit der Platte (65) durch eine axial verschiebbare Gaslanze (33) erreicht wird.

5. Brenner nach einem oder mehreren der Ansprüche 2 bis 4, dadurch gekennzeichnet, daß das Brennerrohr (32) axial bis zu einem Außenraum (16) des Ofens durchgeht.

6. Brenner nach einem oder mehreren der Ansprüche 2 bis 5, dadurch gekennzeichnet, daß das Brennerrohr (32) nur an seinem außenraumseitigen Ende axial elastisch gehalten (49, 50) ist.

7. Brenner nach Anspruch 5 oder 6, dadurch gekennzeichnet, daß die Brennerluft (21) in der Höhe des Außenraums (16) außen an das Brennerrohr (32) geführt wird, und daß stromaufwärts der Platte (65) Öffnungen (92) im Brennerrohr (32) angeordnet sind, so daß die Brennerluft (32) teilweise (87) als Primärluft in den Innenraum des Brennerrohres (32) und teilweise (86) als Sekundärluft an ein Ende des Brennerrohres (32) strömt.

8. Brenner nach einem oder mehreren der Ansprüche 2 bis 7, dadurch gekennzeichnet, daß das Rekuperatorrohr (31) das Brennerrohr (32) koaxial umschließt, und daß das Brennerrohr (32) an seinem verjüngten Ende axial beweglich in einem ofenraumseitigen Ende (97) des Rekuperatorrohrs (31) geführt ist.

## Claims

1. Burner for an industrial furnace, having the form of an insert passing through a furnace wall (12) into a furnace space (15), said insert comprising lines (33, 35, 70) for feeding a fuel (20), in particular fuel gas, burner air (21) and electric energy, and for removing waste gas (23), and having a combustion tube (32), in which is formed a combustion chamber (66) which is delimited by walls (32, 65), the outlet end (56) of which comprising an opening for allowing a flame to enter the furnace space (15), and wherein a gas lance protrudes into the combustion tube (32) for feeding fuel gas (20) into the combustion chamber (66), wherein the combustion tube (32) is surrounded by a recuperator tube (31) while keeping a clearance (36) therebetween for feeding burner air (21), characterized in that said walls (32, 65) are arranged displaceable with respect to each other, so that the volume of the combustion chamber (66) is adjustable, and in that at the rear end of the combustion chamber (66) opposite to the furnace space (15) there is arranged an ignition chamber (68) which his fed with fuel gas (20) via the gas lance (33) through a specific opening (106) and which is fed with burner air (21) via a specific opening (115) from the clearance (36) between the combustion tube (32) and the recuperator tube (31).

2. The burner of claim 1, characterized in that the combustion tube (32) tapers at the outlet end (56), and in that in the combustion tube (32) there is arranged a radial plate (65) at a distance from the tapered end (56), within which the combustion tube (32) is arranged axially displaceable.

3. The burner of claim 2, characterized in that the plate (65) is arranged at the inner end of the tubular formed gas lance (33), in that the burner air (21) passes through openings (100, 101, 106) within the plate (65) from the gas lance (33) into the combustion chamber (66), and in that the axial displaceability of the plate (65) is achieved by the use of gas lances (33) of different lengths.

4. The burner of claim 2, characterized in that the plate (65) is arranged at the inner end of the tubular formed gas lens (33), and in that the burner air (21) passes through openings (100, 101, 106) in the plate (65) from the gas lance (33) into the combustion chamber (66), and in that the axial displaceability of the plate (65) is achieved by an axially displaceable gas lance (33).

5. The burner of one or more of claims 2 - 4, characterized in that the combustion tube (32) passes through axially to an outer space (16) of the furnace.

6. The burner of one or more of claims 2 - 5, characterized in that the combustion tube (32) is axially elastically held (49, 50) only at its outside end.

7. The burner of claim 5 or 6, characterized in that the burner air (21) is delivered externally to the combustion tube (32) at the height of the outer space (16), and in that openings (92) are arranged in the combustion tube (32) upstream from the plate (65), so that the burner air (32) flows partly (87) as primary air into the interior space of the combustion tube (32) and partly (86) as secondary air to one end of the combustion tube (32).

8. The burner of one or more of claims 2 - 7, characterized in that the recuperator tube (31) coaxially surrounds the combustion tube (32), and in that the combustion tube (32) is guided at its tapered end, in an axially movable manner, in one end (97) of the recuperator tube (31) on the furnace-space side.

## Revendications

1. Brûleur pour fours industriels, sous la forme d'un insert, qui dépasse à travers une paroi de four (12) dans un espace de four (15), ledit insert comprenant des conduits (33, 35, 70) pour amener le combustible (20), en particulier du gaz combustible, de l'air comburant (21) et de l'énergie électrique, ainsi que pour évacuer des gaz d'échappement (23), doté d'un brûleur tubulaire (32) dans lequel est formée une chambre de combustion (66) délimitée par des parois (32, 65) et dont l'extrémité de sortie (56) présente une ouverture pour l'entrée d'une flamme dans l'espace de four (15), une lance à gaz dépassant dans le brûleur tubulaire (32) pour alimenter en combustible (20) la chambre de combustion (66), le brûleur tubulaire (32) étant entouré d'un tube collecteur (31), définissant ainsi un espace intermédiaire (35) par lequel l'air comburant (21) est amené, caractérisé en ce que les parois (32, 65) sont espacées l'une de l'autre d'une distance réglable, de telle sorte qu'il soit possible de régler le volume de la chambre de combustion (66) et en ce qu'à l'extrémité postérieure de la chambre de combustion (66) qui est opposée à l'espace de four (15 est prévue une chambre d'ignition (68) alimentée en combustible (20) par la lance à gaz (33) via un premier orifice (106) et en air comburant (21) provenant de l'espace intermédiaire (35) défini entre le brûleur tubulaire (32) et le tube collecteur (31) via un second orifice (115).

2. Brûleur selon la revendication 1, caractérisé en ce que le brûleur tubulaire (32) est effilé à son extrémité de sortie (56) et en ce qu'une plaque radiale (65) est agencée mobile axialement dans le brûleur tubulaire (32), à distance de l'extrémité effilée (56).

3. Brûleur selon la revendication 2, caractérisé en ce que la plaque (65) est agencée à l'extrémité interne de la lance à gaz (33) tubulaire, en ce que l'air comburant (21) sort de la lance à gaz (33) pour traverser la plaque (65) par les orifices (100, 101, 106) avant d'arriver dans la chambre de combustion (66) et en ce que la mobilité axiale de la plaque (65) est assurée par l'utilisation de lances à gaz (33) de longueurs différentes.

4. Brûleur selon la revendication 2, caractérisé en ce que la plaque (65) est agencée à l'extrémité interne de la lance à gaz (33) tubulaire, en ce que l'air comburant (21) sort de la lance à gaz (33) pour traverser la plaque (65) par les orifices (100, 101, 106) avant d'arriver dans la chambre de combustion (66) et en ce que la mobilité axiale de la plaque (65) est assurée par une lance à gaz (33) mobile axialement.

5. Brûleur selon une ou plusieurs des revendications 2 à 4, caractérisé en ce que le brûleur tubulaire (32) s'étend axialement jusqu'à un espace externe (16) du four.

6. Brûleur selon une ou plusieurs des revendications 2 à 5, caractérisé en ce que le brûleur tubulaire (32) n'est maintenu axialement de manière élastique (49, 50) qu'à son extrémité située côté espace externe.

7. Brûleur selon les revendications 5 ou 6, caractérisé en ce que l'air comburant (21) est amené à la hauteur de l'espace externe (16) en dehors et le long du brûleur tubulaire (32) et en ce qu'en amont de la plaque (65), des orifices (92) sont ménagés dans le brûleur tubulaire (32) de telle sorte que l'air comburant (21) pénètre partiellement (87) comme air primaire dans l'espace interne du brûleur tubulaire (32) et partiellement (86) comme air secondaire à une extrémité du brûleur tubulaire (32).

8. Brûleur selon une ou plusieurs des revendications 2 à 7, caractérisé en ce que le tube collecteur (31) entoure coaxialement le brûleur tubulaire (32) et en ce que l'extrémité effilée du brûleur tubulaire (32) est guidée mobile axialement dans l'extrémité située côté espace de four (97) du tube collecteur (31).
